# EUROPÄISCHE PATENTSCHRIFT

(11) **EP 1 174 213 B1**
(45) Veröffentlichungstag und Bekanntmachung des Hinweises auf die Patenterteilung: **15.08.2007**
(21) Anmeldenummer: 01810683.1
(22) Anmeldetag: 09.07.2001
(51) Int. Cl.: B23Q 11/10, B23Q 11/12, B25D 17/20

(54) **Elektrohandwerkzeuggerät mit elektropneumatischem Schlagwerk**
Electro-pneumatic power tool
Outil a percussion électropneumatique

(30) Priorität: 19.07.2000 DE 10037418
(43) Veröffentlichungstag der Anmeldung: 23.01.2002
(73) Patentinhaber: HILTI Aktiengesellschaft, 9494 Schaan (LI)
(72) Erfinder: Bonger-Ambrosius, Hans-Werner, 81477 München (DE); Richter, Martin, 85354 Freising (DE); Artmann, Konrad, 82237 Wörthsee (DE)
(74) Vertreter: Wildi, Roland

(56) Entgegenhaltungen:
- EP-A- 0 992 320
- DE-A- 4 020 773
- DE-U- 29 613 416
- US-A- 1 634 780

## Beschreibung

Die Erfindung betrifft ein zumindest teilweise schlagendes Elektrohandwerkzeuggerät, wie einen Bohrhammer, Kombi- und Meiselhammer, mit elektropneumatischem Schlagwerk vorzugsweise zum schlagend abrasiven Abtrag von Gestein. Derartige Elektrohandwerkzeuggeräte erzeugen aus elektrischer Energie mittels eines Elektromotors und geeigneter mechanischer Transformation eine axiale schlagend schwingende und optional zusätzlich eine überlagerte drehende Bewegung, welche zur zweckentsprechenden Verwendung einem Werkzeug kraft- und formschlüssig übertragen wird.

Bei in dieser Erfindungen ausschliesslich betrachteten elektropneumatischen Schlagwerken wird die zumeist von einem Elektromotor erzeugte mechanische Energie über einen - Exzenter auf einen oszillierenden Erregerkolben und von diesem pneumatisch über eine Gasfeder auf einen Flugkolben übertragen, welcher über einen Döpper diese mechanische Schlagenergie weitgehend auf das schlagende oder schlagdrehende Werkzeug weitergibt.

Durch die wiederholte Verdichtung und Entspannung der Luftsäule der Gasfeder entsteht auf Grund thermodynamischer Prozesse eine Abwärme, die durch Wärmeleitung und Wärmekonvektion an eine kühlere Gehäusewandung des Elektrohandwerkzeuggeräts abgeführt wird, welche sich dadurch bis zur Erreichung eines thermischen Gleichgewichts erwärmt. Leistungsabhängig können Oberflächentemperaturen der Gehäusewandung entstehen, die über den zulässigen Grenztemperaturen im Bereich zwischen 60°C und 80°C liegend Bediener und Umfeld gefährden und somit die nutzbare Schlagleistung des Elektrohandwerkzeuggeräts begrenzen.

Aus der DE3205063A1 sind derartige Elektrohandwerkzeuggeräte bekannt, welche mittels der von einem Lüfter des Elektromotors erzeugten Kühlluft, welche durch das pneumatische Schlagwerk und durch Hohlräume zwischen dem Schlagwerksgehäuse und dem Maschinengehäuse gedrückt wird, ebenfalls das Schlagwerk kühlen. Nach der DE19626254A1 wird mittels axialer Luftdurchtrittsschlitze diese Kühlluft in eine Entriegelungshülse zum Lösen des Werkzeugs aus dem Werkzeughalter eingeleitet und dort zusätzlich zur Kühlung des vorderen Bereiches des Schlagwerks, des Werkzeughalters und des hinteren Bereiches des Werkzeugschaftes benutzt, wo durch die Schlagreibung hohe Temperaturen auftreten.

Nachteilig bei derartigen Lösungen ist die durch die Konvektion der Kühlluft begrenzte Kühlleistung der Gehäusewandung und somit die begrenzte nutzbare Schlagleistung des Elektrohandwerkzeuggeräts.

Die DE4020773A1 offenbart ein derartiges Elektrohandwerkzeuggerät mit einem zusätzlichen Kühlflüssigkeitsbehälter und einer Düse zur Erzeugung eines Sprühnebels zur Befeuchtung des Bearbeitungsstaubes, zur Kühlung des Werkzeugs im Bereich der abrasiv wirkenden Schneiden und zur Spülung des Bearbeitungsmaterials. Die Kühlflüssigkeit wird nicht zur Kühlung des Schlagwerks oder des Elektrohandwerkzeuggeräts benutzt.

Zudem offenbart die US1634780 einen Drucklufthammer, dessen Luftauslassleitung als mehrfach verteilte axial verlaufende Kühlleitung ausgebildet ist. Nach der EP0992320A2 weist eine Elektrokernbohrmaschine eine flüssigkeitsgekühlte Leistungselektronik und einen flüssigkeitsgekühlten Elektromotor auf, dessen Kühlleitung als mehrfach verteilt axial verlaufend ausgebildet ist.

Es ist die Aufgabe dieser Erfindung unter Vermeidung obiger Nachteile eine effizientere Kühlung des Schlagwerks zur Erhöhung der durch die zulässigen Grenztemperaturen der Gehäusewandung begrenzt nutzbaren Schlagleistung des Elektrohandwerkzeuggeräts aufzuzeigen.

Die Aufgabe wird durch die Merkmale des Anspruchs 1 gelöst. Vorteilhafte Weiterbildungen ergeben sich aus den Unteransprüchen.

Im wesentlichen weist ein Gehäuse des Elektrohandwerkzeuggeräts das Schlagwerk umgebende Kühlkanäle auf, durch welches ein flüssiges Kühlmedium, vorzugsweise Wasser, geleitet wird.

Es ist vorteilhaft, die Kühlkanäle ein- oder mehrfach von einem Verteilerkanal abgezweigt in Flussrichtung wendelförmig längs der Schlagachse im axialen Bereich der Gasfeder entlang auszuführen um die Länge der Kühlkanäle und damit die nutzbare Kühlfläche des Schlagwerks zu erhöhen.

Zur Ausbildung der Kühlkanäle ist vorteilhaft das Gehäuse doppelwandig ausgebildet, wobei bei Verwendung unterschiedlicher Materialien zur Vermeidung von korrosiven Lokalelementen durch entsprechende nichtkorrosive Materialpaarungen, Überzüge oder Beschichtungen ein ausreichender Korrosionsschutz sichergestellt ist.

Es ist des weiteren vorteilhaft, das Kühlmittel vor der Kühlung des Schlagwerks zur Kühlung des Antriebs des Elektrohandwerkzeuggerätes und/oder der Motorelektronik zu verwenden.

Vorteilhaft wird das Kühlmittel von einer druckerzeugenden Pumpe durch die Kühlkanäle gefördert sowie weiter vorteilhaft anschliessend zur Spülung/Kühlung des Werkzeuges über eine Düse auf den abrasiv Material abtragenden Arbeitsbereich des Werkzeugs gesprüht.

In einer vorteilhaften Ausführung der Erfindung zeigt
Fig. 1 einen Längsschnitt entlang der Schlagachse durch ein Elektrohandwerkzeuggerät
Fig. 2 eine Gesamtdarstellung mit Spülung/Kühlung eines Werkzeuges.

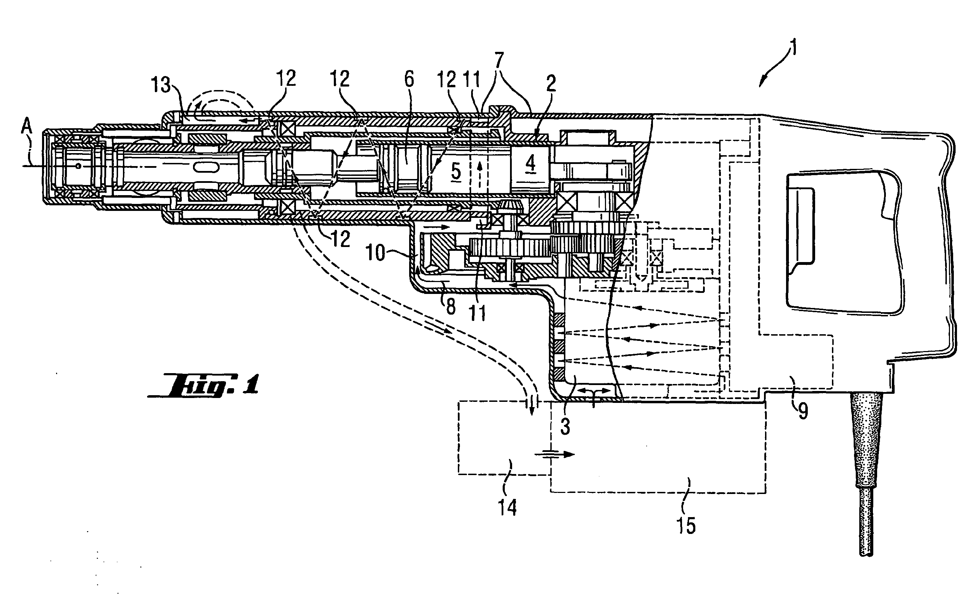

Nach Fig. 1 weist ein Elektrohandwerkzeuggerät 1 mit einem elektropneumatischen Schlagwerk 2, welches einen von einem elektrischen Antrieb 3 elektrisch angetriebenen Exzenter für einen Erregerkolben 4, eine Gasfeder 5 und einen Flugkolben 6 beinhaltet, innerhalb eines vorzugsweise doppelwandigen Gehäuses 7 des Elektrohandwerkzeuggeräts 1 angeordnete flüssigkeitsdichte Kühlkanäle auf, die vorzugsweise durch innere Vertiefungen einzelner Teile des Gehäuses 7 ausgebildet werden, welche in Flussrichtung einer Kühlflüssigkeit 8 von einem, vorteilhaft der Kühlung des elektrischen Antriebs 3 und der Elektronik 9 nachgeordneten, Kühlmitteleintritt 10 ausgehend, in einem sich ringförmig um eine Schlagachse A erstreckenden Verteilerkanal 11 auf einen oder mehrere sich wendelförmig entlang der Schlagachse A zumindest teilweise um die Gasfeder 5 windende Ringkanäle 12 zur Kühlung des Schlagwerkes 2 verzweigen und anschliessend in einem Auslauf 13 zur weiteren Verwendung der Kühlflüssigkeit 8 enden oder, wie gestrichelt dargestellt, in einem Kreislauf zurückgeführt werden.

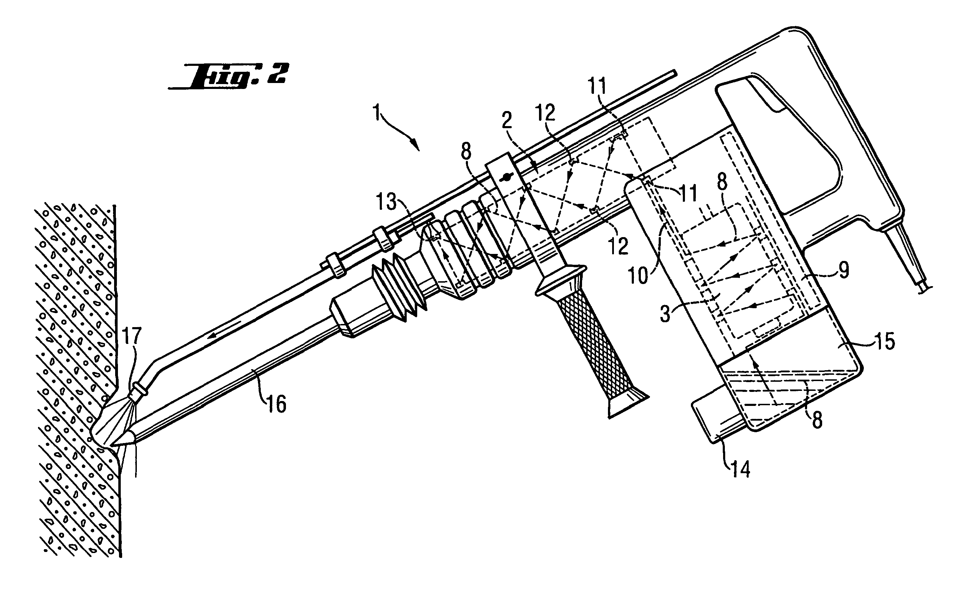

Nach Fig. 2 weist das Elektrohandwerkzeuggerät 1 einen zusätzlichen, vorteilhaft im unteren Bereich eines überwiegend waagerecht benutzten Elektrohandwerkzeuggerätes 1 angeordneten und mit einer Pumpe 14 zur Erzeugung einer Kühlmittelströmung versehenen, Kühlflüssigkeitsbehälter 15 und eine zum freien Ende eines Werkzeuges 16 ausgerichtete und am Elektrohandwerkzeuggerät 1 befestigte rohrförmige Düse 17 zur Spülung/Kühlung der Schneiden des Werkzeugs 16 auf.

## Patentansprüche

1. Elektrohandwerkzeuggerät (1) mit einem elektropneumatischen Schlagwerk (2), welches einen Erregerkolben (4), eine Gasfeder (5) und einen Flugkolben (6) beinhaltet, **dadurch gekennzeichnet, dass** innerhalb eines Gehäuses (7) des Elektrohandwerkzeuggeräts (1) ein das Schlagwerk (2) umgebender flüssigkeitsdichter Kühlkanal (10, 11, 12, 13) angeordnet ist, welcher von einer Kühlflüssigkeit (8) zur Kühlung des Schlagwerkes (2) durchströmt ist.

2. Elektrohandwerkzeuggerät nach Anspruch 1, **dadurch gekennzeichnet, dass** sich die Kühlflüssigkeit (8) von einem Kühlmitteleintritt (10) ausgehend in einem sich ringförmig um eine Schlagachse (A) sich längs der Schlagachse im axialen Bereich der Gasfeder (5) erstreckende Verteilerkanal (10) auf einen oder mehrere sich teilweise längs der Gasfeder (5) erstreckende Ringkanäle (11) verteilt, welche in einem Auslauf (12) zusammengeführt sind.

3. Elektrohandwerkzeuggerät nach einem der vorhergehenden Ansprüche, **dadurch gekennzeichnet, dass** sich die Ringkanäle (11) teilweise wendelförmig zur Schlagachse (A) erstrecken.

4. Elektrohandwerkzeuggerät nach einem der vorhergehenden Ansprüche, **dadurch gekennzeichnet, dass** das Gehäuse (7) doppelwandig ausgeführt ist, wobei der Kühlkanal (10, 11, 12, 13) zumindest teilweise durch innere Vertiefungen einzelner Teile des Gehäuses (7) ausgebildet wird.

5. Elektrohandwerkzeuggerät nach einem der vorhergehenden Ansprüche, **dadurch gekennzeichnet, dass** von der Kühlflüssigkeit (8) ein elektrischer Antrieb (3) und/oder eine Elektronik zur Kühlung umströmt wird.

6. Elektrohandwerkzeuggerät nach einem der vorhergehenden Ansprüche, **dadurch gekennzeichnet, dass** das Elektrohandwerkzeuggerät (1) einen Kühlflüssigkeitsbehälter (15) aufweist.

7. Elektrohandwerkzeuggerät nach Anspruch 6, **dadurch gekennzeichnet, dass** das Elektrohandwerkzeuggerät (1) eine mit dem Kühlflüssigkeitsbehälter (15) das Kühlmittel (8) fördernd verbundene druckerzeugende Pumpe (14) aufweist.

8. Elektrohandwerkzeuggerät nach Anspruch 7, **dadurch gekennzeichnet, dass** das Elektrohandwerkzeuggerät (1) eine mit dem Auslauf (13) leitungsfähig verbundene, das Kühlmittel (8) auf ein Werkzeug (16) versprühende, Düse (17) aufweist.

## Claims

1. Electric hand tool (1) comprising an electropneumatic striking mechanism (2) including an exciter piston (4), a gas spring (5) and a free piston (6), **characterised in that** a liquid-tight cooling duct (10, 11, 12, 13) surrounding the striking mechanism (2) through which a coolant (8) flows for cooling the striking mechanism (2) is arranged within a housing (7) of the electric hand tool (1).

2. Electric hand tool according to claim 1, **characterised in that**, departing from a coolant inlet (10), the coolant (8) flows into a distribution duct (10) extending in an annular manner around a striking axis (A) along the striking axis in the axial region of the gas spring (5) and is distributed to one or more annular ducts (11) extending partially along the gas spring (5) and brought together at an outlet (12).

3. Electric hand tool according to one of the preceding claims, **characterised in that** the annular ducts (11) extend partially helically around the striking axis (A).

4. Electric hand tool according to one of the preceding claims, **characterised in that** the housing (7) is double-walled, the cooling duct (10, 11, 12, 13) being formed at least partially by inner recesses in individual parts of the housing (7).

5. Electric hand tool according to one of the preceding claims, **characterised in that** the coolant (8) flows around an electric drive (3) and/or the electronics for cooling.

6. Electric hand tool according to one of the preceding claims, **characterised in that** the electric hand tool (1) has a coolant container (15).

7. Electric hand tool according to claim 6, **characterised in that** the electric hand tool (1) has a pressure-generating pump (14) connected to the coolant container (15) for delivering the coolant (8).

8. Electric hand tool according to claim 7, **characterised in that** the electric hand tool (1) has a nozzle (17) conductively connected to the outlet (13) for spraying the coolant (8) on to a tool (16).

## Revendications

1. Appareil portatif électrique (1) comprenant un mécanisme de percussion électropneumatique (2), lequel comporte un piston excitateur (4), un ressort à gaz (5) et un piston volant (6), **caractérisé en ce qu'**à l'intérieur d'un carter (7) de l'appareil portatif électrique (1) est disposé un canal de refroidissement étanche aux liquides (10, 11, 12, 13) qui entoure le mécanisme de percussion (2) et qui est parcouru par un liquide de refroidissement (8) pour refroidir le mécanisme de percussion (2).

2. Appareil portatif électrique selon la revendication 1, **caractérisé en ce que**, dans un canal de répartition (10) s'étendant annulairement autour d'un axe de percussion (A) le long de ce dernier dans la direction axiale du ressort à gaz (5), le liquide de refroidissement (8) est réparti, à partir d'une entrée d'agent de refroidissement (10), vers un ou plusieurs canaux annulaires (11) qui s'étendent partiellement le long du ressort à gaz (5) et qui se rejoignent au niveau d'un orifice de sortie (12).

3. Appareil portatif électrique selon une des revendications précédentes, **caractérisé en ce que** les canaux annulaires (11) s'étendent partiellement de manière hélicoïdale par rapport à l'axe de percussion (A).

4. Appareil portatif électrique selon une des revendications précédentes, **caractérisé en ce que** le carter (7) est conçu avec une double paroi, le canal de refroidissement (10, 11, 12, 13) étant réalisé au moins partiellement par des creux intérieurs de différentes parties du carter (7).

5. Appareil portatif électrique selon une des revendications précédentes, **caractérisé en ce que** le liquide de refroidissement (8) circule autour d'un moyen d'entraînement électrique (3) et/ou d'une électronique pour les refroidir.

6. Appareil portatif électrique selon une des revendications précédentes, **caractérisé en ce que** l'appareil portatif électrique (1) comporte un réservoir de liquide de refroidissement (15).

7. Appareil portatif électrique selon la revendication 6, **caractérisé en ce que** l'appareil portatif électrique (1) comporte une pompe génératrice de pression (14) reliée au réservoir de liquide de refroidissement (15) pour refouler l'agent de refroidissement (8).

8. Appareil portatif électrique selon la revendication 7, **caractérisé en ce que** l'appareil portatif électrique (1) comporte une buse (17) qui est reliée par une conduite à l'orifice de sortie (13) et qui pulvérise l'agent de refroidissement (8) sur un outil (16).
